# EUROPÄISCHE PATENTSCHRIFT

(11) **EP 3 075 081 B1**
(45) Veröffentlichungstag und Bekanntmachung des Hinweises auf die Patenterteilung: **07.07.2021**
(21) Anmeldenummer: 14808545.9
(22) Anmeldetag: 25.11.2014
(51) Int. Cl.: H04B 7/26, H04B 7/155

(54) **FAHRZEUG-KOMMUNIKATIONSSYSTEM UND VERFAHREN ZUM BETRIEB EINES SOLCHEN SYSTEMS**
VEHICLE COMMUNICATION SYSTEM AND RELATED METHOD
SYSTÈME DE COMMUNICATION POUR VÉHICULE ET PROCÉDÉ DE COMMUNICATION

(30) Priorität: 29.11.2013 DE 102013224514
(43) Veröffentlichungstag der Anmeldung: 05.10.2016
(73) Patentinhaber: Bayerische Motoren Werke Aktiengesellschaft, 80809 München (DE)
(72) Erfinder: FIKAR, Stefan, 80809 München (DE); KAINDL, Markus, 85579 Neubiberg (DE); KHAN, Sajjad, 85375 Neufahrn (DE)
(86) Internationale Anmeldenummer: PCT/EP2014/075493
(87) Internationale Veröffentlichungsnummer: WO 2015/078848

(56) Entgegenhaltungen:
- EP-A1- 2 128 841
- DE-A1-102011 116 430
- DE-A1-102012 208 641
- US-B1- 6 493 629

## Beschreibung

Die Erfindung betrifft ein Kommunikationssystem für ein Fahrzeug und ein Verfahren zum Betrieb eines solchen Kommunikationssystems. Kraftfahrzeuge sind heute vielfach mit einem Kommunikationssystem ausgestattet, über das vom Fahrzeuginneren eine Mobilfunkverbindung zu einem Mobilfunknetz erfolgen kann. Das Kommunikationssystem kann dabei eine Freisprechanlage umfassen, die zum Beispiel mit einem mobilen Endgerät wie einem Smart Phone vorübergehend während der Fahrt verbindbar ist. Die Verbindung kann dabei kabelgebunden oder auch mittels einer drahtlosen lokalen Funkverbindung, beispielsweise entsprechend dem Bluetooth-Standard, erfolgen. Weiterhin kann vorgesehen sein, dass das Kommunikationssystem des Fahrzeugs eine fest im Fahrzeug integrierte Mobilfunkeinheit umfasst, z.B. eine so genannte Telematik-Einheit. Mit einer solchen Einheit kann für weitere Steuereinheiten des Fahrzeugs wie beispielsweise für ein Navigationsgerät oder für ein Multimediagerät eine Verbindung zu zentralen Vermittlungsstellen eines Mobilfunknetzes und insbesondere eine Telefonverbindung zu zentralen Dienstleistern aufgebaut werden. Von der BMW Gruppe wird hierzu zum Beispiel das System Connected Drive angeboten, über das von einem Fahrzeug direkt eine Verbindung zu einem Auskunftsdienst, dem so genannten Concierge-Dienst, oder zu einer Notrufzentrale aufgebaut werden kann.

Zudem kann mit einer Telematikeinheit eine Datenverbindung zu zentralen Computern wie zum Beispiel zu so genannten Backend Servern von überregionalen Informationsdiensten oder zu Datenbank-Diensten aufgebaut werden. Solche Verbindungen können insbesondere Internetverbindungen umfassen.

In einem Fahrzeug können weiterhin Komponenten eines Kommunikationssystems vorgesehen sein, mit denen eine drahtlose Verbindung in ein Computernetzwerk herstellbar ist, beispielsweise Wireless Local Area Network (WLAN) Komponenten.

Für die jeweiligen Verbindungen in die Mobilfunk- bzw. Computernetzwerke sind in dem Fahrzeug insbesondere innen und/oder außen am Fahrzeug entsprechende Antennen vorgesehen, über die innen im Fahrzeug fest oder vorübergehend befindliche Kommunikationseinheiten mit außerhalb des Fahrzeugs befindlichen Funkeinheiten und/oder Netzwerkkomponenten in Verbindung treten können. Beispielsweise können außen am Fahrzeug eine oder mehrere Mobilfunkantennen vorgesehen sein um eine drahtlose Verbindung zu Basisstationen von Mobilfunknetzen aufzubauen. Innen im Fahrzeug kann beispielsweise eine WLAN-Antenne vorgesehen sein. Die innere und äußere Antenne können beispielsweise über eine im oder am Fahrzeug angebrachte Steuerung miteinander verbunden sein.

Aus der EP 1 863 119 A1, der EP 1 903 632 A1 und der DE 10 2010 061 995 A sind Antennenmodule für Mobilfunkverbindungen für Fahrzeuge bekannt, die jeweils mehrere Antennen aufweisen.

Die Inhalte der oben genannten Veröffentlichungen werden hiermit durch Bezugnahme in die vorliegende Beschreibung aufgenommen.

Aus der DE 10 2012 208 641 A1 ist ein Kommunikationssystem mit einer Kleinst-Funkzellen-Basisstation für ein Fahrzeug bekannt, bei dem die Kleinst-Funkzellen-Basisstation wahlweise mit einer von mehreren Antennen betreibbar ist.

Aus der EP 2 128 841 A1 ist eine Telematik-Einheit für ein Fahrzeug bekannt, mit der Notrufe abgesetzt werden können, die derart redundant ausgelegt ist, dass wenn ein Teil der Telematik-Einheit ausfällt, der Notruf auch mittels eines anderen Teils der Einheit abgesetzt werden kann.

Aus der US 6,593,629 B1 ist ein Telematik-Kommunikationssystem für ein Fahrzeug bekannt, das einen Zugangspunkt für ein Wireless Local Area Network (WLAN) umfasst und im Falle eines Notfalls entsprechende Daten aussendet.

Aus der DE 10 2011 116 430 A1 ist ein Antennensystem für ein Fahrzeug bekannt, das eine erste und eine zweite Antenne umfasst, wobei HF-Signale der beiden Antennen über einen HF- Schalter wahlweise von der ersten oder der zweiten Antenne an ein Fahrzeug-Steuermodul übertragbar sind.

Es ist Aufgabe der Erfindung, mit einem Kommunikationssystem für ein Fahrzeug, das mehrere Antennen aufweist, eine möglichst stabile Verbindung zwischen Kommunikationseinheiten zu ermöglichen.

Diese Aufgabe wird durch die in den unabhängigen Patentansprüchen angegebene Erfindung gelöst. Vorteilhafte Ausführungsformen der Erfindung sind in den abhängigen Ansprüchen angegeben.

Erfindungsgemäß umfasst ein Kommunikationssystem für ein Fahrzeug mehrere Antennen und mehrere Sende- und/oder Empfangsschnittstellen. Zumindest eine erste Antenne ist im Innenraum des Fahrzeugs angeordnet ist. Zumindest eine zweite Antenne ist außen am Fahrzeug angeordnet. Die erste Antenne ist ausgebildet um über eine erste Sende- und/oder Empfangsschnittstelle zumindest einen Teil einer Datenverbindung zwischen einer ersten Kommunikationseinheit, die sich im Innenraum des Fahrzeugs befindet und mindestens einer ersten, außerhalb des Fahrzeugs befindlichen Netzwerkbasiseinheit, drahtlos herzustellen. Die zweite Antenne ist ausgebildet um über eine zweite Sende- und/oder Empfangsschnittstelle zumindest einen Teil einer Datenverbindung zwischen einer zweiten Kommunikationseinheit, die sich im Innenraum des Fahrzeugs befindet und der ersten und/oder einer zweiten, außerhalb des Fahrzeugs befindlichen Netzwerkbasiseinheit, drahtlos herzustellen. Das Kommunikationssystem ist derart ausgebildet ist, dass innerhalb des Fahrzeugs zwischen der zweiten Kommunikationseinheit und der ersten Antenne über die zweite Sende- und/oder Empfangsschnittstelle eine Datenverbindung herstellbar ist.

In dem Kommunikationssystem ist weiterhin eine Schaltanordnung vorgesehen, durch die von der zweiten Sende- und/oder Empfangsschnittstelle wahlweise eine Datenverbindung zu der ersten Antenne oder zu der zweiten Antenne herstellbar ist und die erste Sende- und/oder Empfangsschnittstelle zwischen den beiden Antennen umschaltbar ist. Die Schaltanordnung umfasst einen drahtgebundenen Kreuzschalter.

Dadurch, dass bei der Erfindung innerhalb des Fahrzeugs zwischen der zweiten Kommunikationseinheit und der ersten Antenne über die zweite Sende- und/oder Empfangsschnittstelle eine Datenverbindung herstellbar ist, kann insbesondere bei einem Ausfall der zweiten Antenne gewährleistet werden, dass von einer im Fahrzeuginneren befindlichen Kommunikationseinheit noch eine Mobilfunk- und/oder Datenverbindung zu einer Netzwerkbasiseinheit und damit zu dem Mobilfunk- bzw. Datennetzwerk bzw. zur Außenwelt hergestellt werden kann. Dieser Vorteil der Erfindung ist beispielsweise dann von hoher Bedeutung, wenn die zweite Antenne wegen eines Unfalls des Fahrzeugs ausfällt und vom Fahrzeuginneren ein Notruf abgesetzt werden soll.

Die Erfindung beruht insbesondere auf der Erkenntnis, dass die erste, innerhalb des Fahrzeugs angeordnete Antenne bei einem Unfall des Fahrzeugs wesentlich besser vor Beschädigung geschützt ist als die außerhalb des Fahrzeugs befindliche zweite Antenne. Die Erfindung beruht dabei weiterhin auf der Erkenntnis, dass der Innenraum des Fahrzeugs für die erste Antenne einen guten Schutz gegen mechanische Beschädigung bietet. Der Begriff Innenraum umfasst dabei insbesondere einen bei einem Unfall mit hoher Wahrscheinlichkeit relativ unversehrt bleibenden bzw. einem gegenüber von außen wirkenden mechanischen Stößen unempfindlichen bzw. mittels einer oder mehrerer Schutzeinrichtungen geschützten Raum wie z.B. den Fahrgastraum, den Kofferraum und/oder den Motorraum. Die zweite, außen am Fahrzeug angeordnete Antenne ist insbesondere zumindest teilweise außerhalb der Fahrzeug-Karosserie, beispielsweise in einem außen am Fahrzeugdach angebrachten Gehäuse wie z.B. einer so genannten Dachfinne angebracht. Dieser Montageort ist dabei insbesondere geeignet um fahrzeugseitig mit der zweiten Antenne eine gegenüber der fahrzeuginternen ersten Antenne eine höhere Empfangsempfindlichkeit und/oder effektive Abstrahlleistung zu bewirken, insbesondere weil es dort kaum Abschirmwirkungen der Fahrzeugkarosserie gibt.

Mit der Erfindung kann weiterhin vorteilhaft erreicht werden, dass das Kommunikationssystem innerhalb des Fahrzeugs lediglich eine erste Antenne aufweist, die jedoch zur wahlweisen Ausführung zweier Kommunikationsverbindungen ausgebildet ist, insbesondere für eine erste Netzwerkverbindung zu einem mobilen Endgerät innerhalb des Fahrzeugs, die eine WLAN-Verbindung sein kann, und für eine zweite Netzwerkverbindung von einer fest im Fahrzeug vorgesehenen Mobilfunkeinheit, insbesondere von einer Telematikeinheit, direkt zu einer außerhalb des Fahrzeugs befindlichen Netzwerkbasisstation. Im Rahmen der vorliegenden Erfindung ist der Begriff WLAN als Oberbegriff für verschiedene Funkübertragungstechnologien zu verstehen, mittels denen Computer vernetzbar sind, beispielsweise gemäß einem der Technologiestandards IEEE 802.11xx.

Eine mit dem Kommunikationssystem bewirkte Kommunikationsverbindung kann als Sprach- und/oder Datenverbindung, z.B. nach einem der Technologie-Standards GSM (Global System for Mobile Communications) oder LTE (Long Term Evolution) ausgebildet sein. Die mindestens eine innerhalb des Fahrzeugs vorgesehene Antenne kann als WLAN-Antenne ausgebildet sein um als Antenne des WLAN-Zugangspunkts (engl. Access Point) eine drahtlose Verbindung zu einem in dem Fahrzeug befindlichen mobilen Endgerät herzustellen. Dazu sind im Fahrzeug entsprechende Komponenten und Schnittstellen zum Verarbeiten von Daten und Signalen vorgesehen, die den jeweiligen Technologie-Standards entsprechend. Dabei können auch Komponenten bzw. Schnittstellen vorgesehen sein, die Signale und/oder Daten zwischen dem fahrzeuginternen WLAN-Zugangspunkt und außerhalb des Fahrzeugs befindlichen Mobilfunk-Basisstationen übertragen bzw. diese Signale und/oder Daten verarbeiten.

Die Sende- und/oder Empfangsschnittstellen können insbesondere Komponenten umfassen, die Signale und/oder Daten entsprechend mindestens einem der Standards WLAN und LTE verarbeiten können. Die Sende- und/oder Empfangsschnittstellen können insbesondere zumindest teilweise als entsprechende integrierte Schaltkreise (Chip) ausgebildet sein. Die Kommunikationseinheiten können jeweils zum Herstellen von Mobilfunkverbindungen und/oder von Datenübertragungsverbindungen ausgebildet sein. Sie können sich als mobile Einheiten vorübergehend im Fahrzeug befinden (z.B. als Smart Phone) oder fest im Fahrzeug verbaut sein (z.B. als Telematikeinheit).

Mit der Erfindung ist es insbesondere möglich, die für das jeweilige Kommunikationsgerät verwendete Fahrzeugantenne bedarfsgerecht flexibel an das Kommunikationsgerät anzukoppeln. Die Verbindung zwischen der zweiten Kommunikationseinheit und der ersten Antenne kann dabei automatisch bei Eintreten vorgegebener Bedingungen hergestellt werden. Die Bedingungen können sensorisch erfasst werden. Dazu können weiterhin Ankopplungsregeln vorgegeben werden, mit denen die Ankopplung parametergesteuert und/oder sensorgesteuert erfolgt. Die vorgegebenen Bedingungen können einen Ausfall und insbesondere die ganze oder teilweise mechanische und/oder elektrische Zerstörung der zweiten Antenne und/oder einen Unfall des Fahrzeugs umfassen. Eine entsprechende Ankopplungsregel kann beispielsweise umfassen, dass im Falle eines von einer Sensoreinheit des Fahrzeugs festgestellten Unfall-Ereignisses, das beispielsweise einen Airbag auslöst, zunächst geprüft wird, ob eine Kommunikationsverbindung zu einer Netzwerkbasisstation über zumindest eine außen am Fahrzeug angebrachte Antenne erfolgen kann und andernfalls eine Kommunikationsverbindung über zumindest eine im Fahrzeug angeordnete Antenne aufgebaut wird. Eine entsprechende Prüfung kann auch anderweitig ausgelöst werden, zum Beispiel, wenn eine Notruftaste im Fahrzeug gedrückt wird.

In dem Kommunikationssystem kann insbesondere eine Schaltanordnung vorgesehen sein durch die von der zweiten Sende- und/oder Empfangsschnittstelle wahlweise eine Datenverbindung zu der ersten Antenne oder zu der zweiten Antenne herstellbar ist. Durch die Schaltanordnung kann insbesondere auch die erste Sende- und/oder Empfangsschnittstelle zwischen den beiden Antennen umschaltbar sein bzw. umgeschaltet werden. Die Schaltanordnung kann insbesondere einen drahtgebundenen Wechsel- bzw. Kreuzschalter (engl. Double Pole Double Throw, DPDT) und/oder Steuerungskomponenten umfassen, mit denen die Ankopplungsregeln ausgeführt werden.

Damit kann die für den Innenraum vorgesehene Sende/Empfangs-Einheit bei Bedarf auf den Außenraum geschaltet werden. Dies kann z.B. für die Einwahl in einen externen WLAN Hotspot von Nutzen sein.

In einem bevorzugten Ausführungsbeispiel der Erfindung sind die erste und insbesondere auch die zweite Sende- und/oder Empfangsschnittstelle sowie die erste Antenne im Innenraum des Fahrzeugs in einer Sende- und/oder Empfangseinheit angeordnet. Diese Einheit kann ein so genanntes Network Access Device (NAD) umfassen.

Mit der Erfindung können auch für mehrere Geräte, die sich im Innenbereich des Fahrzeugs befinden, eine stabile Kommunikationsverbindung und eine gute Verbindungsqualität nach außen ermöglicht werden.

Gemäß einem weiteren vorteilhaften Ausführungsbeispiel der Erfindung ist außen am Fahrzeug eine dritte Antenne angeordnet und innen im Fahrzeug eine dritte Sende- und/oder Empfangsschnittstelle, durch die zumindest ein Teil einer Kommunikationsverbindung zwischen der ersten, der zweiten und/oder einer dritten im Fahrzeug angeordneten Kommunikationseinheit zu der außerhalb des Fahrzeugs befindlichen Netzwerkbasiseinheit herstellbar ist. Zumindest eine der Sende- und/oder Empfangsschnittstellen kann insbesondere eine LTE-Schnittstelle sein. Insbesondere kann die erste Sende- und/oder Empfangsschnittstelle eine WLAN-Schnittstelle sein, die mindestens eine WLAN-fähige Komponente umfasst. Die zweite und/oder die dritte Sende- und/oder Empfangsschnittstelle kann jeweils eine Mobilfunkschnittstelle, insbesondere eine LTE-Schnittstelle sein, die mindestens eine LTE-fähige Komponente umfasst. Die erste Antenne kann insbesondere derart ausgebildet sein, dass sie sowohl WLAN-Signale als auch Mobilfunksignale, insbesondere LTE-Signale, senden und/oder empfangen kann.

In einem weiteren vorteilhaften Ausführungsbeispiel der Erfindung sind die zweite und dritte Antenne jeweils am Dach des Fahrzeugs angeordnet. Sie sind insbesondere von einer gemeinsamen Hülle umgeben sind, die beispielsweise als Dachfinne ausgebildet ist.

Im Folgenden werden weitere Ausführungsbeispiele der Erfindung anhand von Figuren näher erläutert. Es zeigen:
Figur 1 ein Fahrzeug mit einer ersten Kommunikationseinheit,
Figur 2 ein Fahrzeug mit einer zweiten Kommunikationseinheit,
Figur 3 ein Fahrzeug mit einer Schalteinrichtung in einem ersten Betriebszustand und
Figur 4 ein Fahrzeug mit einer Schalteinrichtung in einem zweiten Betriebszustand.

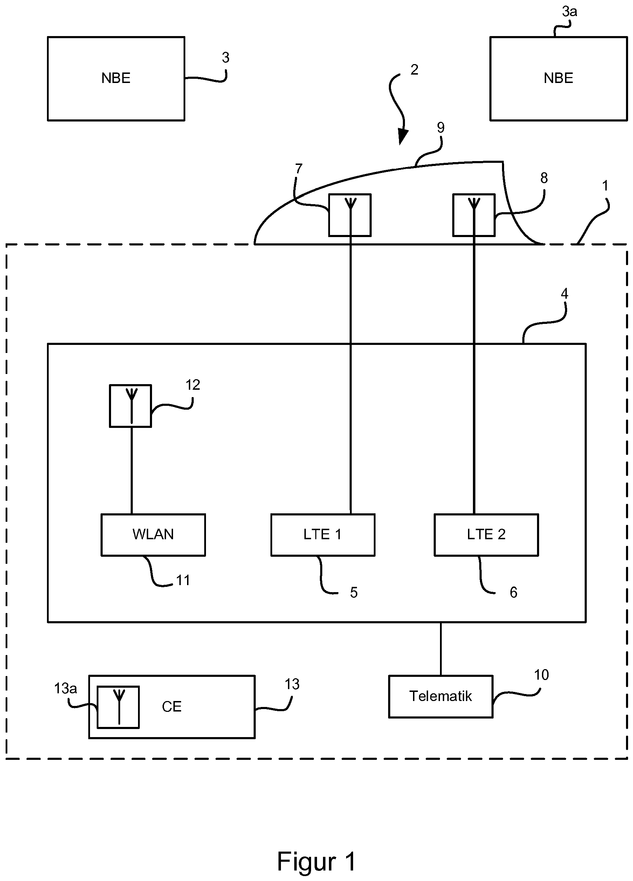

In Figur 1 ist ein Kraftfahrzeug 1 dargestellt, das ein Kommunikationssystem 2 aufweist, über das eine LTE-Kommunikationsverbindung zwischen dem Kraftfahrzeug 1 und ortsfest installierten Netzwerkbasisstationen 3, 3a einer überregionalen Mobilfunkinfrastruktur eines Mobilfunkbetreibers hergestellt werden kann. Das Kommunikationssystem 2 kann darüber hinaus Kommunikationsverbindungen über weitere Kommunikationsstandards wie GSM 1/2/3 und WLAN herstellen. Kernstück des Kommunikationssystems 2 ist eine Netzwerkzugangseinheit (Network Access Device, NAD) 4. Diese weist wiederum als Sende- und Empfangsschnittstellen elektronische LTE-Steuerungskomponenten (Chips) 5, 6 auf, mit denen die LTE-spezifische Kommunikation zur Netzwerkbasisstation 3 entsprechend einem LTE-Netzwerkprotokoll gesteuert wird. Die LTE-Steuerungskomponente 5 ist dazu weiterhin an eine Außenantenne 7 angeschlossen, die in einem Dachfinnen-Gehäuse 9 außen am Dach des Kraftfahrzeugs 1 befestigt ist. Die LTE-Steuerungskomponente 6 ist entsprechend an eine Außenantenne 8 angeschlossen, die sich ebenfalls im Gehäuse 9 befindet. Für den Aufbau einer LTE-Verbindung vom Fahrzeug 1 zur Netzwerkbasisstation 3 werden beide LTE-Steuerungskomponenten 5, 6 und beide Antennen 7, 8 verwendet. Für eine GSM-Mobilfunkverbindung zwischen Fahrzeug 1 und einer der Netzwerkbasisstationen 3, 3a genügt es demgegenüber, jeweils nur eine der Antennen 7, 8 und eine entsprechende GSM-Steuerungskomponente zu verwenden. Dazu ist insbesondere vorgesehen, dass die LTE-Steuerungskomponenten 5, 6 auch GSM-fähig sind. Auch die Antennen 7, 8 sind geeignet, sowohl Signale entsprechend dem LTE-Standard als auch Signale gemäß mindestens einem der GSM-Standards GSM1, GSM2 und GSM3 zu übertragen.

In dem Kraftfahrzeug 1 ist weiterhin eine Telematikeinheit 10 fest eingebaut, die mit der Netzwerkzugangseinheit 4 verbunden ist und über die sie eine Mobilfunkverbindung zu einer der Netzwerkbasisstationen 3, 3a aufbauen kann.

Dazu werden wahlweise die LTE-Steuerungskomponente 5 und Antenne 7 oder die LTE-Steuerungskomponente 6 und Antenne 8 verwendet.

In der Netzwerkzugangseinheit 4 und damit auch innerhalb des Kraftfahrzeugs 1 sind weiterhin als Sende- und/oder Empfangsschnittstelle eine WLAN-Steuerungskomponente 11 sowie eine damit verbundene WLAN-Antenne 12 vorgesehen. Die WLAN-Steuerungskomponente 11 kann über die beiden LTE-Steuerungskomponenten 5, 6 und die beiden Außenantennen 7, 8 eine Datenverbindung zur Netzwerkbasisstation 3 bzw. 3a als Kommunikationsverbindung herstellen und dabei einen Netzwerkzugang in ein Computernetzwerk, beispielsweise zum Internet, ermöglichen. Über die fahrzeuginterne Antenne 12 kann sie diesen Netzwerkzugang als WLAN-Zugang einem im Kraftfahrzeug 1 befindlichen mobilen Endgerät 13, beispielsweise einem Smart Phone bzw. CE-Gerät über dessen Antenne 13a bereit stellen. WLAN-Steuerungskomponente 11 und Antenne 12 fungieren dann als WLAN-Zugangspunkt (Access Point).

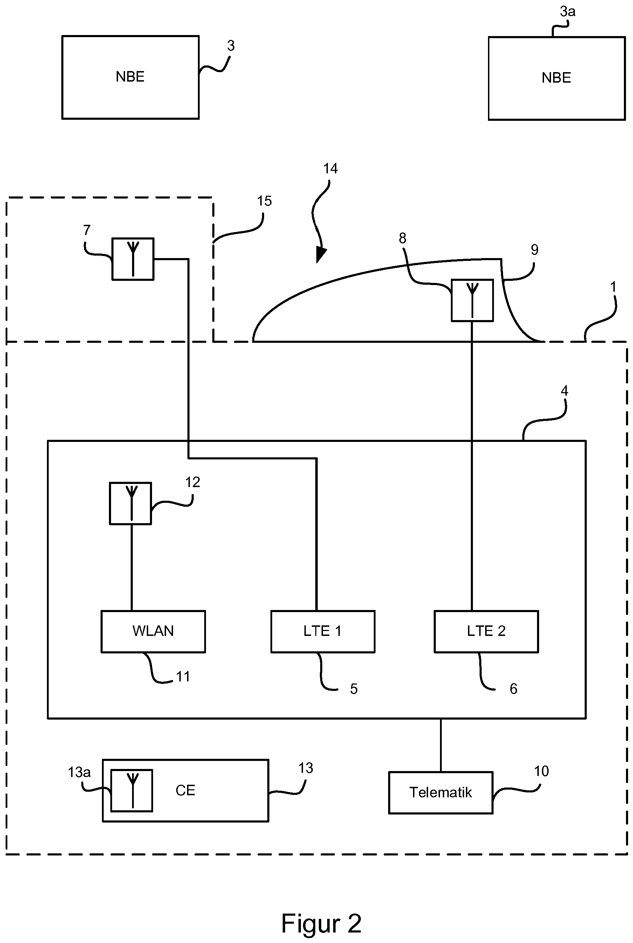

In Figur 2 ist ein Kommunikationssystem 14 eines Kraftfahrzeugs 1 dargestellt, das weitgehend dem Kommunikationssystem 2 der Figur 1 entspricht, wobei gleiche System-Komponenten wiederum mit denselben Bezugszeichen versehen sind. Unterschiedlich ist im Kommunikationssystem 14 insbesondere, dass sich die mit der LTE-Steuerungskomponente 5 verbundene Antenne 7 nicht im Dachfinnengehäuse 17 befindet, sondern an der Kofferraumtrennwand oder an einem anderen Ort im Innenraum 15 des Kraftfahrzeugs 1.

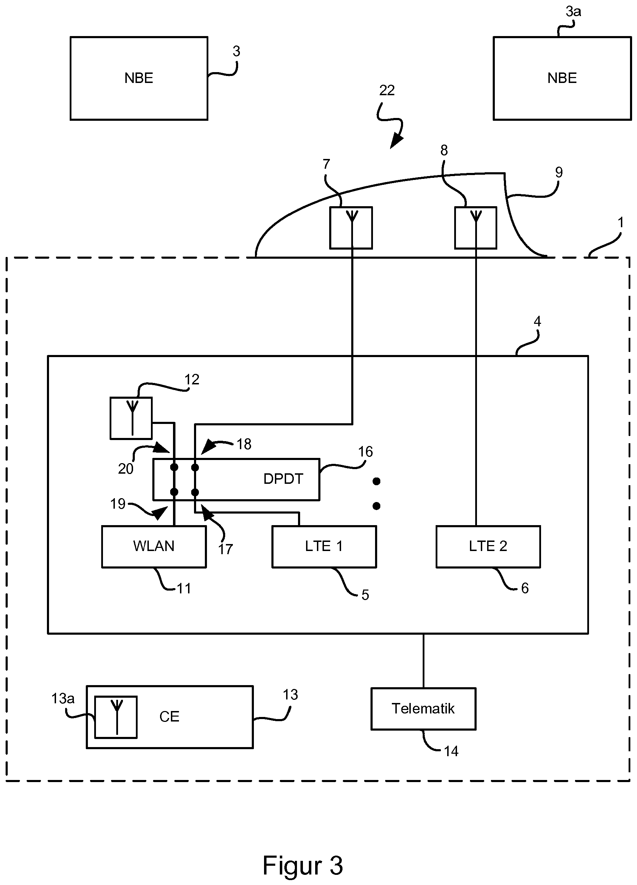

In Figur 3 ist eine weitere gegenüber Figur 1 modifizierte Version des Kommunikationssystems 2 bzw. 14 dargestellt, wobei gleiche System-Komponenten wiederum mit denselben Bezugszeichen versehen sind. Das hier gezeigte Kommunikationssystem 22 weist zudem eine Schaltvorrichtung 16 in Form eines Wechselschalters (Double Pole Double Throw, DPDT) auf, der wiederum vier Anschlüsse für Ein- bzw. Ausgängen aufweist und verschiedene Schaltstellungen einnehmen kann. Am ersten Anschluss 17 ist die LTE-Steuerungskomponente 5 angeschlossen, die in der hier gezeigten Schaltstellung über den Anschluss 18 mit der außen am Kraftfahrzeug 1angebrachten Antenne 7 verbunden ist. In der gezeigten Schaltstellung der Schaltvorrichtung 16 ist weiterhin die WLAN-Steuerungskomponente 11 über die Anschlüsse 19 und 20 mit der fahrzeuginternen WLAN-Antenne 12 verbunden. Die in Figur 3 gezeigte ungekreuzte Schaltstellung der Schaltvorrichtung 16 ermöglicht damit dieselben Kommunikationsverbindungen wie das in Figur 1 gezeigte Kommunikationssystem 2.

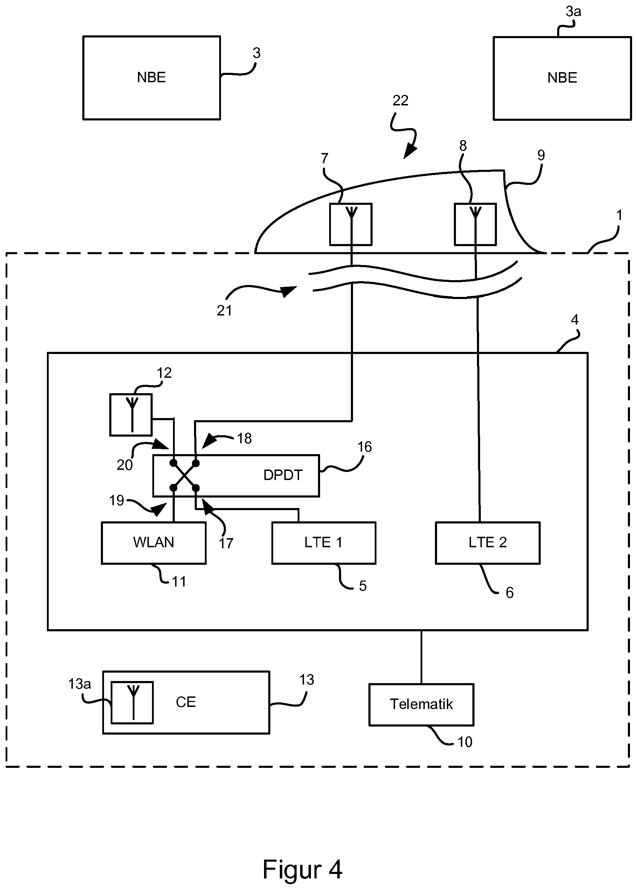

In Figur 4 ist das Kommunikationssystem 22 in einem Zustand gezeigt, bei dem die Verbindungen zwischen Antennen 7, 8 und den LTE-Steuerungskomponenten 5, 6 unterbrochen sind. Diese Unterbrechung 21 kann beispielsweise bei einem Unfall des Kraftfahrzeugs 1 entstanden sein. Sie kann durch eine mechanische und/oder elektrische Zerstörung der Antennen 7, 8 und/oder der entsprechenden Verbindungsleitungen hervorgerufen worden sein. Die im geschützten Fahrgastraum des Kraftfahrzeugs 1 befindliche WLAN-Antenne 12 ist dagegen noch funktionsfähig. Das Kraftfahrzeug 1 weist zudem eine in den Figuren nicht gezeigte elektronische Steuerung und eine Sensorik zur Feststellung eines Unfalls des Fahrzeugs auf, die beispielsweise einen Beschleunigungssensor und eine entsprechende Auswerteeinrichtung umfasst. Bei einem festgestellten Unfallereignis wird automatisch überprüft, ob für eine vorgegebene Kommunikationseinheit, in diesem Ausführungsbeispiel für die Telematikeinheit 10, eine Datenverbindung über zumindest eine der außen am Kraftfahrzeug 1 angebrachten Antennen 7, 8 zu mindestens einer der Netzwerkbasisstationen 3 bzw. 3a erfolgen kann. Falls keine solche Verbindung zustande kommt, veranlasst die Steuerung automatisch die Verbindung zwischen der Telematikeinheit 10 und der Innen- Antenne 12 über die LTE-Steuerungskomponente 5. Zur Herstellung der Verbindung zwischen der LTE-Steuerungskomponente 5 und der Innen-Antenne 12 wird in der Schaltvorrichtung 16 eine entsprechende Verbindung zwischen dem Anschluss 17 für die LTE-Einheit 5 und dem Anschluss 20 für die Antenne 12 hergestellt. Die Schaltvorrichtung 16 ist dabei in ihrem gekreuzten Zustand.

Das in Figur 2 gezeigte Kommunikationssystem 14 kann ebenfalls entsprechend den Modifikationen der Figuren 3 und 4 mit einer entsprechenden Schaltanordnung 16 ausgebildet sein.

Die beschriebenen Geräte und Systemkomponenten werden insbesondere mit Computerprogrammen gesteuert und können dazu weitere, an sich bekannte Elemente von Computern und digitalen Steuerungseinrichtungen wie einen Mikroprozessor, flüchtige und nicht flüchtige Speicher, Schnittstellen usw. aufweisen.

Die Erfindung kann deshalb auch ganz oder teilweise in Form eines Computerprogrammprodukts realisiert werden, das beim Laden und Ausführen auf einem Computer einen erfindungsgemäßen Ablauf ganz oder teilweise bewirkt. Es kann beispielsweise in Form eines Datenträgers wie einer CD oder DVD bereit gestellt werden oder auch in Form einer oder mehrerer Dateien auf einem Server, von dem das Computerprogramm herunter ladbar ist.

## Patentansprüche

1. Kommunikationssystem für ein Fahrzeug (1), umfassend mehrere Antennen (7, 8, 12) und mehrere Sende- und/oder Empfangsschnittstellen (5, 6, 11), wobei
- zumindest eine erste Antenne (12) im Innenraum des Fahrzeugs (1) angeordnet ist und
- zumindest eine zweite Antenne (7, 8) außen am Fahrzeug (1) angeordnet ist,
- die erste Antenne (12) ausgebildet ist um über eine erste Sende- und/oder Empfangsschnittstelle (11) zumindest einen Teil einer Datenverbindung zwischen einer ersten Kommunikationseinheit (13), die sich im Innenraum des Fahrzeugs (1) befindet und mindestens einer ersten, außerhalb des Fahrzeugs (1) befindlichen Netzwerkbasiseinheit (3), drahtlos herzustellen,
- die zweite Antenne (7, 8) ausgebildet ist um über eine zweite Sende- und/oder Empfangsschnittstelle (5, 6) zumindest einen Teil einer Datenverbindung zwischen einer zweiten Kommunikationseinheit (10, 14), die sich im Innenraum des Fahrzeugs (1) befindet und der ersten und/oder einer zweiten, außerhalb des Fahrzeugs (1) befindlichen Netzwerkbasiseinheit (3a), drahtlos herzustellen,
- das Kommunikationssystem (2, 14, 22) derart ausgebildet ist, dass innerhalb des Fahrzeugs (1) zwischen der zweiten Kommunikationseinheit (10, 14) und der ersten Antenne (12) über die zweite Sende- und/oder Empfangsschnittstelle (5, 6) eine Datenverbindung herstellbar ist,- eine Schaltanordnung (16) vorgesehen ist, durch die von der zweiten Sende- und/oder Empfangsschnittstelle (5, 6) wahlweise eine Datenverbindung zu der ersten Antenne (12) oder zu der zweiten Antenne (7, 8) herstellbar ist und die erste Sende- und/oder Empfangsschnittstelle (11) zwischen den beiden Antennen (12; 7, 8) umschaltbar ist und
- wobei die Schaltanordnung (16) einen drahtgebundenen Kreuzschalter umfasst.

2. Kommunikationssystem nach Anspruch 1, derart eingerichtet, dass für eine bedarfsgerecht flexible Ankopplung zwischen der zweiten Kommunikationseinheit (10, 14) und der ersten Antenne (12) die Verbindung zwischen der zweiten Kommunikationseinheit (10, 14) und der ersten Antenne (12) automatisch bei Eintreten vorgegebener Bedingungen hergestellt wird, wobei die Bedingungen sensorisch erfasst werden und Ankopplungsregeln vorgegeben sind, mit denen die Ankopplung parametergesteuert und/oder sensorgesteuert erfolgt.

3. Kommunikationssystem nach Anspruch 2, **dadurch gekennzeichnet, dass** die Schaltanordnung (16) Steuerungskomponenten umfasst, mit denen die Ankopplungsregeln ausgeführt werden.

4. Kommunikationssystem nach einem der Ansprüche 1 bis 3, **dadurch gekennzeichnet, dass** die erste Sende- und/oder Empfangsschnittstelle und die erste Antenne (12) im Innenraum des Fahrzeugs (1) in einer Sende/Empfangseinheit angeordnet sind.

5. Kommunikationssystem nach einem der vorhergehenden Ansprüche, **dadurch gekennzeichnet, dass** die erste Sende- und/oder Empfangsschnittstelle (11) eine WLAN-Schnittstelle ist und dass die zweite Sende- und/oder Empfangsschnittstelle (5, 6) eine Mobilfunkschnittstelle ist.

6. Kommunikationssystem nach einem der vorhergehenden Ansprüche, **dadurch gekennzeichnet, dass** der Kreuzschalter ein Double Pole Double Throw, DPDT, ist, der vier Anschlüsse für Ein- bzw. Ausgänge aufweist und verschiedene Schaltstellungen einnehmen kann.

7. Kommunikationssystem nach einem der vorhergehenden Ansprüche, **dadurch gekennzeichnet, dass** die erste Antenne (12) derart ausgebildet ist, dass sie sowohl WLAN-Signale als auch Mobilfunksignale, insbesondere LTE-Signale, senden und/oder empfangen kann.

8. Kommunikationssystem nach Anspruch 7, **dadurch gekennzeichnet, dass** die erste Antenne (12) derart ausgebildet ist, dass sie LTE-Signale senden und/oder empfangen kann.

9. Kommunikationssystem nach einem der vorhergehenden Ansprüche, **dadurch gekennzeichnet, dass** die zweite und eine dritte Antenne (7, 8) jeweils am Dach des Fahrzeugs (1) angeordnet sind und insbesondere von einer gemeinsamen Hülle (9) umgeben sind.

10. Kommunikationssystem nach einem der vorhergehenden Ansprüche, umfassend eine elektronische Steuerung und eine Sensorik zur Feststellung eines Unfalls des Fahrzeugs (1), wobei bei einem festgestellten Unfallereignis automatisch überprüft wird, ob für eine vorgegebene Kommunikationseinheit eine Datenverbindung über zumindest eine der außen am Fahrzeug (1) angebrachten Antennen zu einer Netzwerkbasisstation erfolgen kann und falls keine solche Verbindung erfolgen kann, die Steuerung automatisch die Verbindung zwischen dieser vorgegebenen Kommunikationseinheit und der ersten Antenne (12) veranlasst.

11. Verfahren zum Herstellen einer zumindest teilweise drahtlosen Kommunikationsverbindung zwischen mindestens einer in einem Fahrzeug (1) befindlichen Kommunikationseinheit und einer zentralen Netzwerkbasisstation, wobei
- das Kommunikationssystem (2, 14, 22) mehrere Antennen (7, 8, 12) und mehrere Sende- und/oder Empfangsschnittstellen umfasst,
- zumindest eine erste Antenne (12) im Innenraum des Fahrzeugs (1) angeordnet ist und
- zumindest eine zweite Antenne (7, 8) außen am Fahrzeug (1) angeordnet ist,
- mit der ersten Antenne (12) über eine erste Sende- und/oder Empfangsschnittstelle zumindest einen Teil einer Datenverbindung zwischen einer ersten Kommunikationseinheit (13), die sich im Innenraum des Fahrzeugs (1) befindet und mindestens einer ersten, außerhalb des Fahrzeugs (1) befindlichen Netzwerkbasiseinheit (3), drahtlos hergestellt wird,
- mit der zweiten Antenne (7, 8) über eine zweite Sende- und/oder Empfangsschnittstelle (5, 6) zumindest ein Teil einer Datenverbindung zwischen einer zweiten Kommunikationseinheit (10, 14), die sich im Innenraum des Fahrzeugs (1) befindet und der ersten und/oder einer zweiten, außerhalb des Fahrzeugs (1) befindlichen Netzwerkbasiseinheit (3a) drahtlos hergestellt wird,
- innerhalb des Fahrzeugs (1) zwischen der zweiten Kommunikationseinheit (10, 14) und der ersten Antenne (12) über die zweite Sende- und/oder Empfangsschnittstelle (5, 6) eine Datenverbindung hergestellt wird,
- mittels einer Schaltanordnung (16) von der zweiten Sende- und/oder Empfangsschnittstelle (5, 6) wahlweise eine Datenverbindung zu der ersten Antenne (12) oder zu der zweiten Antenne (7, 8) hergestellt wird und die erste Sende- und/oder Empfangsschnittstelle (11) zwischen den beiden Antennen (12; 7, 8) umschaltbar ist, und
- dass die Schaltanordnung (16) einen drahtgebundenen Kreuzschalter umfasst.

12. Verfahren nach Anspruch 11, **dadurch gekennzeichnet, dass** die Verbindung zwischen der zweiten Kommunikationseinheit (10, 14) und der ersten Antenne (12) automatisch bei Eintreten von mindestens einer vorgegebenen Bedingung hergestellt wird.

13. Verfahren nach Anspruch 12, **dadurch gekennzeichnet, dass** die vorgegebenen Bedingungen einen Ausfall der zweiten Antenne (7, 8) und/oder einen Unfall des Fahrzeugs (1) umfassen.

14. Verfahren nach Anspruch 13, **dadurch gekennzeichnet, dass** die vorgegebenen Bedingungen eine Zerstörung der zweiten Antenne (7, 8) umfassen.

15. Verfahren nach einem der Ansprüche 11 bis 14, **dadurch gekennzeichnet, dass** die Verbindung zwischen der zweiten Kommunikationseinheit (10, 14) und der ersten Antenne (12) über eine Kreuzverbindung erfolgt, die zwischen zumindest zwei Antennen und zwei Kommunikationseinheiten vorgesehen ist und durch die zumindest die zweite Kommunikationseinheit (10, 14) wahlweise mit der ersten Antenne (12) oder mit der zweiten Antenne (7, 8) für eine Datenverbindung verbindbar ist.

## Claims

1. Communication system for a vehicle (1), comprising a plurality of antennas (7, 8, 12) and a plurality of transmitting and/or receiving interfaces (5, 6, 11), wherein
- at least one first antenna (12) is arranged in the interior of the vehicle (1), and
- at least one second antenna (7, 8) is arranged on the exterior of the vehicle (1),
- the first antenna (12) is designed to wirelessly establish via a first transmitting and/or receiving interface (11) at least one part of a data connection between a first communication unit (13) situated in the interior of the vehicle (1) and at least one first network base unit (3) situated outside the vehicle (1),
- the second antenna (7, 8) is designed to wirelessly establish via a second transmitting and/or receiving interface (5, 6) at least one part of a data connection between a second communication unit (10, 14) situated in the interior of the vehicle (1) and the first and/or a second network base unit (3a) situated outside the vehicle (1),
- the communication system (2, 14, 22) is designed in such a way that a data connection can be established within the vehicle (1) between the second communication unit (10, 14) and the first antenna (12) via the second transmitting and/or receiving interface (5, 6),
- a switching arrangement (16) is provided, by means of which optionally a data connection to the first antenna (12) or to the second antenna (7, 8) can be established by the second transmitting and/or receiving interface (5, 6) and the first transmitting and/or receiving interface (11) is switchable between the two antennas (12; 7, 8), and
- wherein the switching arrangement (16) comprises a wired crossover switch.

2. Communication system according to Claim 1, configured in such a manner that, for flexible coupling between the second communication unit (10, 14) and the first antenna (12) as required, the connection between the second communication unit (10, 14) and the first antenna (12) is established automatically when predefined conditions occur, wherein the conditions are detected by means of a sensor system and coupling rules are predefined, with which the coupling is effected in a parameter-controlled and/or sensor-controlled manner.

3. Communication system according to Claim 2, **characterized in that** the switching arrangement (16) comprises control components which are used to implement the coupling rules.

4. Communication system according to one of Claims 1 to 3, **characterized in that** the first transmitting and/or receiving interface and the first antenna (12) are arranged in the interior of the vehicle (1) in a transmitting/receiving unit.

5. Communication system according to any of the preceding claims, **characterized in that** the first transmitting and/or receiving interface (11) is a WLAN interface, and **in that** the second transmitting and/or receiving interface (5, 6) is a mobile radio interface.

6. Communication system according to any of the preceding claims, **characterized in that** the crossover switch is a double pole double throw, DPDT, which has four connections for inputs and outputs and can assume different switching positions.

7. Communication system according to any of the preceding claims, **characterized in that** the first antenna (12) is designed in such a way that it can transmit and/or receive both WLAN signals and mobile radio signals, in particular LTE signals.

8. Communication system according to Claim 7, **characterized in that** the first antenna (12) is designed in such a way that it can transmit and/or receive LTE signals.

9. Communication system according to any of the preceding claims, **characterized in that** the second and a third antenna (7, 8) are in each case arranged on the roof of the vehicle (1) and are surrounded in particular by a common enclosure (9).

10. Communication system according to any of the preceding claims, comprising an electronic controller and a sensor assembly for detecting an accident of the vehicle (1), wherein, in the case of a detected accident event, a check is automatically made to ascertain whether for a predefined communication unit a data connection via at least one of the antennas fitted to the exterior of the vehicle (1) to a network base station can be effected and, if no such connection can be effected, the controller automatically instigates the connection between said predefined communication unit and the first antenna (12).

11. Method for establishing an at least partly wireless communication connection between at least one communication unit situated in a vehicle (1) and a central network base station, wherein
- the communication system (2, 14, 22) comprises a plurality of antennas (7, 8, 12) and a plurality of transmitting and/or receiving interfaces,
- at least one first antenna (12) is arranged in the interior of the vehicle (1), and
- at least one second antenna (7, 8) is arranged on the exterior of the vehicle (1),
- the first antenna (12) is used to wirelessly establish via a first transmitting and/or receiving interface at least one part of a data connection between a first communication unit (13) situated in the interior of the vehicle (1) and at least one first network base unit (3) situated outside the vehicle (1),
- the second antenna (7, 8) is used to wirelessly establish via a second transmitting and/or receiving interface (5, 6) at least one part of a data connection between a second communication unit (10, 14) situated in the interior of the vehicle (1) and the first and/or a second network base unit (3a) situated outside the vehicle (1),
- a data connection is established within the vehicle (1) between the second communication unit (10, 14) and the first antenna (12) via the second transmitting and/or receiving interface (5, 6),
- a switching arrangement (16) is used by the second transmitting and/or receiving interface (5, 6) to optionally establish a data connection to the first antenna (12) or to the second antenna (7, 8) and the first transmitting and/or receiving interface (11) is switchable between the two antennas (12; 7, 8), and
- the switching arrangement (16) comprises a wired crossover switch.

12. Method according to Claim 11, **characterized in that** the connection between the second communication unit (10, 14) and the first antenna (12) is established automatically when at least one predefined condition occurs.

13. Method according to Claim 12, **characterized in that** the predefined conditions comprise a failure of the second antenna (7, 8) and/or an accident of the vehicle (1).

14. Method according to Claim 13, **characterized in that** the predefined conditions comprise destruction of the second antenna (7, 8).

15. Method according to any of Claims 11 to 14, **characterized in that** the connection between the second communication unit (10, 14) and the first antenna (12) is effected via a cross-connection which is provided between at least two antennas and two communication units and by means of which at least the second communication unit (10, 14) can be connected optionally to the first antenna (12) or to the second antenna (7, 8) for a data connection.

## Revendications

1. Système de communication pour un véhicule (1), comprenant plusieurs antennes (7, 8, 12) et plusieurs interfaces d'émission et/ou de réception (5, 6, 11), dans lequel
- au moins une première antenne (12) est disposée dans l'habitacle du véhicule (1), et
- au moins une deuxième antenne (7, 8) est disposée à l'extérieur sur le véhicule (1),
- la première antenne (12) est réalisée pour établir sans fil par une première interface d'émission et/ou de réception (11) au moins une partie d'une liaison de données entre une première unité de communication (13) qui se trouve dans l'habitacle du véhicule (1) et au moins une première unité de base de réseau (3) se trouvant à l'extérieur du véhicule (1),
- la deuxième antenne (7, 8) est réalisée pour établir sans fil par une deuxième interface d'émission et/ou de réception (5, 6) au moins une partie d'une liaison de données entre une deuxième unité de communication (10, 14) qui se trouve dans l'habitacle du véhicule (1) et la première et/ou une deuxième unité de base de réseau (3a) se trouvant à l'extérieur du véhicule (1),
- le système de communication (2, 14, 22) est réalisé de telle sorte qu'à l'intérieur du véhicule (1), entre la deuxième unité de communication (10, 14) et la première antenne (12), une liaison de données peut être établie par la deuxième interface d'émission et/ou de réception (5, 6),
- un agencement de commutation (16) étant prévu qui permet d'établir à partir de la deuxième interface d'émission et/ou de réception (5, 6) une liaison de données au choix avec la première antenne (12) ou la deuxième antenne (7, 8), et de commuter la première interface d'émission et/ou de réception (11) entre les deux antennes (12 ; 7, 8), et
- l'agencement de commutation (16) comprenant un interrupteur permutateur filaire.

2. Système de communication selon la revendication 1, aménagé de telle sorte que pour un accouplement flexible adapté aux besoins entre la deuxième unité de communication (10, 14) et la première antenne (12), la liaison entre la deuxième unité de communication (10, 14) et la première antenne (12) est établie automatiquement lorsque des conditions prédéfinies surviennent, les conditions étant détectées par des capteurs, et des règles d'accouplement étant prédéfinies selon lesquelles l'accouplement est effectué en étant commandé par des paramètres et/ou des capteurs.

3. Système de communication selon la revendication 2, **caractérisé en ce que** l'agencement de commutation (16) comprend des composants de commande qui exécutent les règles d'accouplement.

4. Système de communication selon l'une quelconque des revendications 1 à 3, **caractérisé en ce que** la première interface d'émission et/ou de réception et la première antenne (12) sont disposées dans l'habitacle du véhicule (1) dans une unité d'émission et/ou de réception.

5. Système de communication selon l'une quelconque des revendications précédentes, **caractérisé en ce que** la première interface d'émission et/ou de réception (11) est une interface WLAN, et **en ce que** la deuxième interface d'émission et/ou de réception (5, 6) est une interface de téléphonie mobile.

6. Système de communication selon l'une quelconque des revendications précédentes, **caractérisé en ce que** l'interrupteur permutateur est un interrupteur bipolaire bidirectionnel, DPDT, qui présente quatre connexions pour des entrées ou des sorties et peut adopter différentes positions de commutation.

7. Système de communication selon l'une quelconque des revendications précédentes, **caractérisé en ce que** la première antenne (12) est réalisée de telle sorte qu'elle peut émettre et/ou recevoir à la fois des signaux WLAN et des signaux de téléphonie mobile, en particulier des signaux LTE.

8. Système de communication selon la revendication 7, **caractérisé en ce que** la première antenne (12) est réalisée de telle sorte qu'elle peut émettre et/ou recevoir des signaux LTE.

9. Système de communication selon l'une quelconque des revendications précédentes, **caractérisé en ce que** la deuxième et une troisième antenne (7, 8) sont disposées respectivement sur le toit du véhicule (1), et sont entourées en particulier par une enveloppe commune (9).

10. Système de communication selon l'une quelconque des revendications précédentes, comprenant une commande électronique et un système de capteurs pour constater un accident du véhicule (1), dans lequel, si un événement d'accident est constaté, il est vérifié automatiquement si pour une unité de communication prédéfinie, une liaison de données peut être effectuée par au moins l'une des antennes fixées à l'extérieur sur le véhicule (1) avec une station de base de réseau, et si aucune liaison de ce type ne peut être effectuée, la commande provoque automatiquement la liaison entre cette unité de communication prédéfinie et la première antenne (12).

11. Procédé d'établissement d'une liaison de communication au moins partiellement sans fil entre au moins une unité de communication se trouvant dans un véhicule (1) et une station de base de réseau centrale, dans lequel
- le système de communication (2, 14, 22) comprend plusieurs antennes (7, 8, 12) et plusieurs interfaces d'émission et/ou de réception,
- au moins une première antenne (12) est disposée dans l'habitacle du véhicule (1), et
- au moins une deuxième antenne (7, 8) est disposée à l'extérieur sur le véhicule (1),
- au moins une partie d'une liaison de données entre une première unité de communication (13) qui se trouve dans l'habitacle du véhicule (1) et au moins une première unité de base de réseau (3) se trouvant à l'extérieur du véhicule (1) est établie sans fil à l'aide de la première antenne (12) par une première interface d'émission et/ou de réception,
- au moins une partie d'une liaison de données entre une deuxième unité de communication (10, 14) qui se trouve dans l'habitacle du véhicule (1) et la première et/ou une deuxième unité de base de réseau (3a) se trouvant à l'extérieur du véhicule (1) est établie sans fil à l'aide de la deuxième antenne (7, 8) par une deuxième interface d'émission et/ou de réception (5, 6),
- une liaison de données est établie à l'intérieur du véhicule (1) entre la deuxième unité de communication (10, 14) et la première antenne (12) par la deuxième interface d'émission et/ou de réception (5, 6),
- un agencement de commutation (16) permet d'établir à partir de la deuxième interface d'émission et/ou de réception (5, 6) une liaison de données au choix avec la première antenne (12) ou la deuxième antenne (7, 8), et de commuter la première interface d'émission et/ou de réception (11) entre les deux antennes (12 ; 7, 8), et
- l'agencement de commutation (16) comprend un interrupteur permutateur filaire.

12. Procédé selon la revendication 11, **caractérisé en ce que** la liaison entre la deuxième unité de communication (10, 14) et la première antenne (12) est établie automatiquement si au moins une condition prédéfinie survient.

13. Procédé selon la revendication 12, **caractérisé en ce que** les conditions prédéfinies comprennent une panne de la deuxième antenne (7, 8) et/ou un accident du véhicule (1).

14. Procédé selon la revendication 13, **caractérisé en ce que** les conditions prédéfinies comprennent une destruction de la deuxième antenne (7, 8).

15. Procédé selon l'une quelconque des revendications 11 à 14, **caractérisé en ce que** la liaison entre la deuxième unité de communication (10, 14) et la première antenne (12) passe par une liaison croisée qui est prévue entre au moins deux antennes et deux unités de communication et par laquelle au moins la deuxième unité de communication (10, 14) peut être reliée au choix à la première antenne (12) ou à la deuxième antenne (7, 8) pour une liaison de données.
